# EUROPEAN PATENT SPECIFICATION

(11) **EP 2 705 120 B1**
(45) Date of publication and mention of the grant of the patent: **08.06.2016**
(21) Application number: 12713660.4
(22) Date of filing: 29.03.2012
(51) Int. Cl.: C10J 3/48, C21B 13/00, C10J 3/86, C10K 1/02

(54) **PROCESS AND PLANT FOR THE PRODUCTION AND FURTHER TREATMENT OF FUEL GAS**
VERFAHREN UND ANLAGE ZUR HERSTELLUNG UND WEITEREN BEHANDLUNG VON BRENNGAS
PROCÉDÉ ET PLANTE POUR LA PRODUCTION ET LE TRAITEMENT ULTÉRIEUR D'UN GAZ COMBUSTIBLE

(30) Priority: 04.05.2011 DE 102011100490
(43) Date of publication of application: 12.03.2014
(73) Proprietor: Outotec (Finland) Oy, 02230 Espoo (FI)
(72) Inventor: ORTH, Andreas, 61381 Friedrichsdorf (DE); VON GARNIER, Agnes, 61440 Oberursel (DE)
(74) Representative: Keil & Schaafhausen Patent- und Rechtsanwälte PartGmbB
(86) International application number: PCT/EP2012/055599
(87) International publication number: WO 2012/150097

(56) References cited:
- EP-A1- 0 179 752
- EP-A2- 0 202 428
- WO-A1-03/029389
- US-A- 3 853 538
- US-A- 4 260 412
- US-A- 4 469 488
- US-A1- 2002 078 795
- US-A1- 2004 202 597

## Description

This invention relates to a process for the production of fuel gas and for carrying out a metallurgical process, in which in a first process stage biomass is reacted with an oxygen-containing gas to obtain a fuel gas containing carbon monoxide, hydrogen, carbon dioxide and/or steam, wherein the fuel gas obtained is cooled to a temperature of 300 to 600 °C, preferably 350 to 450 °C, and subsequently supplied to a filtration means, and wherein in a second process stage the filtered fuel gas is charged to at least one burner of the metallurgical process, and to a plant for carrying out this process.

To be able to use fine iron ores for the production of pig iron or direct-reduced iron (DRI), they are mixed with water and agglomerated to pellets. The thermal energy necessary for drying and curing the pellets is provided by the combustion of natural gas or oil. Many regions in which new pellet plants are being planned are, however, not connected to a natural gas network, but often have occurrences of carbonaceous materials, such as coal or biomass.

Similar conditions of the local infrastructure, in particular the availability of carbonaceous materials such as coal or biomass as the only energy source, can also be found at sites for other metallurgical processes such as the calcination of alumina earth.

As a consequence, it is economically expedient to convert the existing carbonaceous materials (e.g. coal or biomass) to fuel gas, so that they are energetically usable for the succeeding metallurgical process.

DE 102 60 734 A1 describes a process for the production of carbonization coke and fuel gas in a fluidized-bed reactor, wherein the fluidized bed is an annular fluidized bed. The gas velocities of the first gas and of the fluidizing gas for the annular fluidized bed are adjusted in a certain ratio relative to each other, so that solids from the stationary annular fluidized bed are introduced into an upper region, the mixing chamber region, and mixed there intensively, before the particles fall back into the annular fluidized bed.

EP 0 062 363 A1 describes a process for the production of fuel gas, in which the byproducts obtained can be reduced. First, gasification is carried out in the presence of steam in a fluidized bed, the gas formed then is liberated from sulfur compounds, cooled and dedusted, and then the residue from the gasification is burnt.

The gasification of carbonaceous materials - in particular of coal - to a fuel gas, which substantially consists of carbon monoxide, hydrogen, carbon dioxide and steam, results in the formation of tar. The tars contained in the hot gases involve the risk that they are deposited in plant sections and harden there. This would first of all lead to a reduction of the conduit cross-sections and as a result to changed flow conditions, which renders a regulation and control of the plant much more difficult. Further deposits might lead to a complete clogging of plant sections, which represents a considerable safety risk.

WO 2009/074170 A1 therefore describes that the fuel gas produced in the gasification of coal first is supplied to a solids separation and subsequently transferred to a further wash, by means of which the tar can be removed.

US 4,461,629 also teaches that after the gasification of coal the tars present must urgently be removed from the fuel gas, as otherwise tar deposits and the involved risks will occur. For this purpose, the fuel gas is introduced into a fluidized-bed reactor and cooled there. Impurities present, in particular the tars, are deposited on the particles of the fluidized bed, while the fuel gas can be cleaned and after cooling be supplied to the next process step.

US 4,563,195 on the one hand describes the possibility of tar removal by washing with cold water, which however involves the disadvantage that this produces large amounts of waste water. As an ecologically more expedient variant of tar removal, on the other hand, a wash with a rather small amount of water therefore is described, which is effected in that the fuel gases are passed through a water spray. This has the advantage of a distinctly lower moisture content of the tars removed in this way, which allows a burn-off of the tars.

Various possibilities of the wash, e.g. a Rectisol® wash, are also known from the general scientific literature, for example from Jörg Schmalfeld, "Die Veredelung und Umwandlung von Kohle-Technologien und Projekte 1970 bis 2000 in Deutschland", Urbanverlag, Hamburg 2008.

WO 03/055962 A1 describes the gasification of carbonaceous materials and teaches to remove the generated tars from the product gas by recycled and cooled ash particles. The tars inside the product gas stream, which condensate onto these particles, are separated from the product gas in a particle separator and burned inside an ash reactor.

All processes have in common that a use of the resulting hot fuel gas for a downstream metallurgical process only is possible when the fuel gas is subjected to an expensive and ecologically not unproblematic tar removal.

Therefore, it is the object of the present invention to allow for the coupling of a fuel gas production with a metallurgical process, without first having to remove the tar from the fuel gas.

In accordance with the invention, this object is solved with the features of claim 1 and 5. In a first process stage, carbonaceous materials, in particular biomass, is reacted with an oxygen-containing gas, which in particular can be oxygen, air, compressed air or industrial air (80 vol-% nitrogen, 20 vol-% oxygen), to obtain a fuel gas containing carbon monoxide, hydrogen, carbon dioxide and/or steam. The fuel gas thus obtained subsequently is cooled to a temperature of 300 to 600 °C, preferably 350 to 450 °C, more preferably 380 to 420 °C, and in particular 400 ± 5 °C and supplied to a solids removal. Such solids removal in particular is at least one filter, wherein the use of candle filters here is particularly useful, since ceramic candle filters are quite useful for hot gas filtration, because they hardly show wear phenomena despite the relatively high temperatures of gas and particles.

In the sense of this description, the term "carbonaceous material" stands for a material whose carbon content preferably corresponds to at least 25 wt-% of its dry matter, more preferably at least 30 wt-% of its dry matter, even more preferably at least 35 wt-% of its dry matter, most preferably at least 40 wt-% of its dry matter, and in particular to at least 45 wt-% of its dry matter. In a further preferred embodiment, the carbon content in the carbonaceous material corresponds to at least half its dry matter.

According to the invention, the carbonaceous material is biomass (preferably solid biomass).

In the sense of this description, the term "biomass" stands for organic substances which can also be referred to as "renewable raw materials". The carbon content of the biomass (preferably solid biomass) preferably corresponds to at least 25 wt-% of its dry matter, more preferably at least 30 wt-% of its dry matter, even more preferably at least 35 wt-% of its dry matter, most preferably at least 40 wt-% of its dry matter, and in particular to at least 45 wt-% of its dry matter. In a particularly preferred embodiment, the carbon content in the biomass, preferably solid biomass, corresponds to at least half its dry matter.

In a second process stage, the filtered fuel gas then is charged to at least one burner of the metallurgical process and used as fuel for this burner. The injection of the fuel gas from the filtration into at least one burner is effected directly, i.e. in particular without interconnection of further process/cleaning stages, wherein the temperature of the fuel gas between filtration and burner inlet is maintained in the range from 300 to 600 °C, preferably 350 to 450 °C.

The adjustment of the temperature loss can be effected by minimizing the heat losses and according to the invention by heat supply. The conduit design on the one hand is a suitable means for minimizing the heat losses. The connecting line between filtration and burner therefore can be insulated. On the other hand, the heat losses can be reduced in that the conduit has a rather small heat-exchange surface, which can be effected both by a suitable guidance of the conduit and by a reduction of the conduit cross-section.

A heat supply is possible via a direct or indirect heating of the conduit. A combination of these two measures also is conceivable.

By adjusting the temperature of the fuel gas to 300 to 600 °C, preferably 380 to 420 °C, and particularly preferably to a value of 400 ± 5 °C, the temperature lies above the condensation temperature of tar. The condensation of tar detrimental to a stationarily and safely operated process thereby can reliably be prevented.

Since the fuel gas subsequently is supplied to a burner, temperatures are produced by the combustion of the gas at which the tars are also burnt, so that a purification of the fuel gas no longer is necessary even in a future process stage. Thus, at least one cleaning stage of the fuel gas is saved and in addition the ecological burden is reduced, which in particular in the conventional washes occurs due to the resulting polluted water.

As metallurgical process, pelletizing is particularly useful, for example for iron, or the calcination, as it is used for example in the production of alumina.

Furthermore, it was found to be advantageous to gasify the carbonaceous materials in a fluidized bed, as in this way a sufficiently long retention time of the solids in the system can be ensured for a high gas yield and low production of tar. The use of a circulating fluidized bed is particularly favorable, as the same is characterized by a very good heat and mass transfer. What is quite particularly advantageous are systems in which the advantages of a stationary fluidized bed and a circulating fluidized bed are combined with each other. Such process is described for example in DE 102 60 734 A1.

To be able to supply the fuel gas to a filtration at all, it is necessary to at least partly cool the gas. An energetically attractive design can herein be achieved in that by cooling the fuel gas steam is generated and this steam is at least partly utilized for power generation and/or as moderator in the first process stage. It is particularly advantageous to utilize a part of the energy thus generated in the first process stage, in particular for temperature moderation, and to use the remaining residual amount of steam for power generation.

A use in the first preheating stage in particular can consist in that the steam generated by cooling the fuel gas is at least partly utilized as fluidizing gas in the fluidized bed of the first process stage. This has the advantage that the use of a further gas as fluidizing gas can be omitted.

The invention furthermore comprises a plant with the features of claim 1, which is suitable for carrying out the process according to the invention. Such plant includes a first and a second process stage, wherein the first process stage consists of at least one reactor for producing fuel gas containing carbon monoxide, hydrogen, carbon dioxide and/or steam and at least one supply conduit each for biomass and an oxygen-containing gas. The second process stage contains at least one reactor for carrying out a metallurgical process, such as pelletizing or calcination, and at least one burner. Furthermore, between the first and the second process stage at least one cooling device and an adjoining filter, are provided. Via a direct conduit, the filter is connected with at least one burner of the second process stage. Heat losses can already be minimized by this direct conduit.

To furthermore be able to ensure that the temperature of the fuel gas does not decrease to a value at which tars condensate out, the conduit can be equipped with at least one means for minimizing the heat losses. According to the invention, the conduit is equipped with at least one device for heat supply. Means for minimizing the heat losses include any form of insulations or variations of the heat-exchange surface. As heat supply, any form of direct or indirect heating can be provided, in particular double-walled tubes with the passage of a heating medium are recommended for example, or also a conduit design in which the waste heat of adjacent components is utilized.

To utilize the energy released in the process during cooling, it is expedient to design the cooling device as steam generator, in particular as waste heat boiler.

The steam thus generated can be supplied from the steam outlet of the steam generator via a conduit to a power generation and/or to the first process stage. As a result, the energy released in the process can be utilized in the process itself either as heat carrier or as energy carrier.

It is particularly advantageous when the conduit which leads from the steam generator to the first process stage includes a valve for regulating or controlling the steam quantity, as in this way the temperature within the first process stage can be adjusted with a simple control variable, namely the steam quantity supplied.

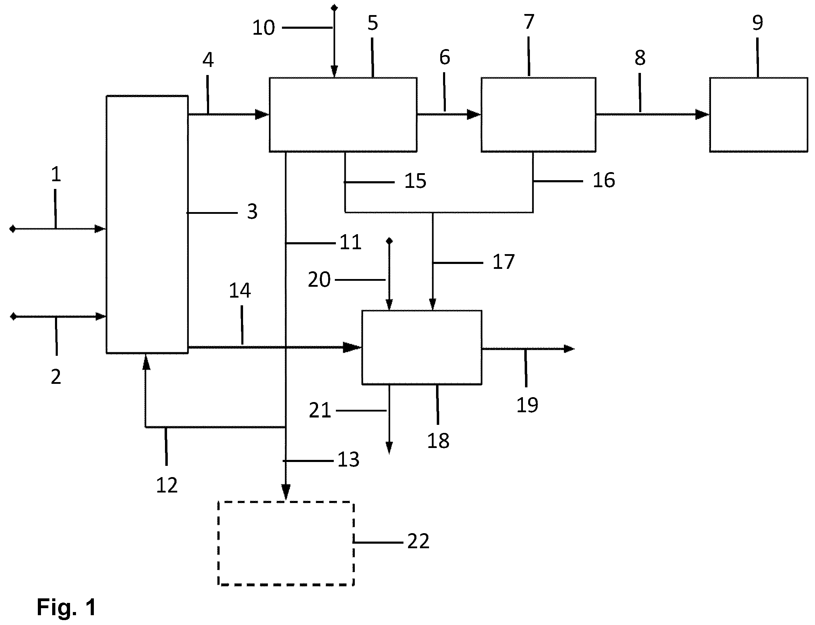

Further developments, advantages and possible applications of the invention can also be taken from the following description of an exemplary embodiment and the drawing. All features described and/or illustrated form the subject-matter of the invention per se or in any combination, independent of their inclusion in the claims or their back-reference.

The only Figure shows a schematic diagram of the process according to the invention.

Via conduit 1 carbonaceous materials, preferably comminuted coal or biomass, in particular solid biomass is fed into the gasification reactor 3, which in a non-illustrated manner preferably includes a circulating fluidized bed, and is gasified there with oxygen or air enriched with oxygen supplied via conduit 2 in a manner known to the skilled person. The fuel gas obtained during the gasification is withdrawn from the reactor 3 via conduit 4. Conduit 4 opens into the steam generator 5, which via conduit 6 is connected with a hot-gas filtration 7, e.g. by ceramic candle filters. Via conduit 8, the filtered fuel gas subsequently is transferred into a pelletizing plant 9 with a temperature of about 400 °C.

Via conduit 10, the steam generator 5 is supplied with water. The steam obtained due to the heat exchange is withdrawn via conduit 11. Conduit 11 is split into conduits 12 and 13, wherein conduit 12 opens into the gasification reactor 3 in which the steam preferably is used as fluidizing gas. Conduit 13 is the supply conduit of a turbine 22 for power generation.

Furthermore, ash is withdrawn via conduit 14 from the reactor 3, via conduit 15 from the steam generator 5, and via conduit 16 from the hot gas filtration 7. The ash removed from the reactor 3 via conduit 14 is the bottom product obtained in the reactor 3, whereas the two conduits 15 and 16, which each transport fly ash, open into conduit 17. The collected ash is cooled in the cooling device 18 and subsequently discharged via conduit 19. As cooling medium of the cooling device 18 water preferably is used, which is supplied via conduit 20 and discharged via conduit 21.

Due to the direct coupling of the gasification with the metallurgical process, an expensive and cost-intensive wet gas cleaning and the related disposal of the tar-loaded waste waters or residual substances can be avoided.

### Example

To the coal gasification, 13 t/h of ground coal (grain size > 6 mm) are charged with the following composition:

| Proximate analysis | | Elemental analysis |
|---|---|---|
| C_{fix}: | 33 wt-% (dry) | C: 78 % |
| Volatile components: | 27 wt-% (dry) | H: 5 % |
| Ash: | 40 wt-% (dry) | S: 0.5 % |
| Moisture: | 6.7 % | O: 16.5 % (calculated) |
| | | |
| Upper calorific value | 17 MJ/kg | |
| Ash softening temperature: | 1400 - 1500 °C | |

In the fluidized bed gasification 21,000 Nm³/h of fuel gas (coal gas) with a calorific value of 7.0 MJ/Nm³ are formed. The fuel gas is composed as follows: Molar gas composition

| | |
|---|---|
| CO | 23.4 |
| CO₂ | 22.1 |
| H₂ | 29.0 |
| H₂O | 21.4 |
| CH₄ | 2.5 |
| O₂ | 0.0 |
| N₂ | 1.4 |
| H₂S | 0.1 |
| COS | 0.007 |
| Tars | 0.003 |
| Rest | 0.09 |

In ceramic candle filters, the gas is filtered to a dust content of > 20 mg/Nm³, preferably 5 mg/Nm³, and fed into the burners of the pelletizing plant with a temperature of 420 ± 5 °C.

### List of Reference Numerals

- 1, 2: conduit
- 3: reactor (first process stage)
- 4: conduit
- 5: cooling device
- 6: conduit
- 7: hot gas filtration
- 8: conduit
- 9: pelletizing plant (second process stage)
- 10-17: conduit
- 18: ash cooling
- 19-21: conduit
- 22: turbine

## Claims

1. A plant for producing fuel gas and for carrying out a metallurgical process with a first and a second process stage, wherein the first process stage contains at least one reactor (3) for producing fuel gas containing carbon monoxide, hydrogen, carbon dioxide and/or steam and at least one supply conduit each for biomass (1) and an oxygen-containing gas (2), wherein the second process stage contains at least one reactor (9) for carrying out a metallurgical process and at least one burner, and wherein after the first process stage at least one cooling device (5) and subsequently at least one filter (7) is provided, **characterized in that** from the filter (7) a direct conduit (8) leads into at least one of the burners of the second process stage and that the conduit (8) is equipped with at least one device for heat supply to maintain the temperature of the fuel gas above the condensation temperature of tar.

2. The plant according to claim 1, **characterized in that** the cooling device (5) is a steam generator.

3. The plant according to claim 2, **characterized in that** the steam outlet of the steam generator (5) is connected with a power generation (22) and/or the first process stage via a conduit (11, 12, 13).

4. The plant according to claim 3, **characterized in that** in the conduit (12) from the steam generator (5) to the first process stage a valve is provided for regulating or controlling the steam quantity.

5. A process for producing fuel gas and for carrying out a metallurgical process in the plant of claim 1, wherein in a first process stage biomass is reacted with an oxygen-containing gas to obtain a fuel gas containing carbon monoxide, hydrogen, carbon dioxide and/or steam, wherein the fuel gas obtained is cooled to a temperature of 300 to 600 °C, preferably 350 to 450 °C, and subsequently subjected to a filtration, and wherein in a second process stage the fuel gas is supplied to at least one burner of the metallurgical process, **characterized in that** the fuel gas from the filtration is directly supplied to the at least one burner of the second process stage, wherein after cooling the temperature of the fuel gas is maintained above the condensation temperature of tar and within the range from 300 to 600 °C, preferably 350 to 450 °C, by supplying heat.

6. The process according to claim 5, **characterized in that** the biomass is gasified in a fluidized bed.

7. The process according to claim 5 or 6, **characterized in that** the steam generated on cooling the fuel gas is at least partly utilized for power generation and/or in the first process stage.

8. The process according to claim 5 or 6, **characterized in that** the steam generated on cooling the fuel gas is at least partly utilized as fluidizing gas in the fluidized bed.

## Patentansprüche

1. Eine Anlage zur Erzeugung von Brenngas und Durchführung eines metallurgischen Prozesses mit einer ersten und einer zweiten Verfahrensstufe, wobei die erste Verfahrensstufe wenigstens einen Reaktor (3) zur Erzeugung von Kohlenmonoxid, Wasserstoff, Kohlendioxid und/oder Wasserdampf enthaltendem Brenngas sowie wenigstens je eine Zufuhrleitung für Biomasse (1) und ein sauerstoffhaltiges Gas (2) enthält, wobei die zweite Verfahrensstufe wenigstens einen Reaktor (9) zur Durchführung eines metallurgischen Prozesses und wenigstens einen Brenner enthält und wobei nach der ersten Verfahrensstufe wenigstens eine Kühlvorrichtung (5) und sich daran anschließend wenigstens ein Filter (7) vorgesehen ist, **dadurch gekennzeichnet, dass** von dem Filter (7) eine direkte Leitung (8) in wenigstens einen der Brenner der zweiten Verfahrensstufe führt und dass die Leitung (8) mit wenigstens einer Vorrichtung zur Wärmezufuhr ausgestattet ist, um die Temperatur des Brenngases oberhalb der Kondensationstemperatur von Teer zu halten.

2. Die Anlage nach Anspruch 1, **dadurch gekennzeichnet, dass** die Kühlvorrichtung (5) ein Dampferzeuger ist.

3. Die Anlage nach Anspruch 2, **dadurch gekennzeichnet, dass** der Dampfauslass des Dampferzeugers (5) über eine Leitung (11, 12, 13) mit einer Stromerzeugung (22) und/oder der ersten Verfahrensstufe verbunden ist.

4. Die Anlage nach Anspruch 3, **dadurch gekennzeichnet, dass** in der Leitung (12) von dem Dampferzeuger (5) zur ersten Verfahrensstufe ein Ventil zur Regelung oder Steuerung der Dampfmenge vorgesehen ist.

5. Ein Verfahren zur Erzeugung von Brenngas und zur Durchführung eines metallurgischen Prozesses in der Anlage nach Anspruch 1, wobei in einer ersten Verfahrensstufe Biomasse mit einem sauerstoffhaltigen Gas zu einem Kohlenmonoxid, Wasserstoff, Kohlendioxid und/oder Wasserdampf enthaltenden Brenngas umgesetzt wird, wobei das entstandene Brenngas auf eine Temperatur von 300 - 600 °C, vorzugsweise 350 - 450 ° C, abgekühlt und im Anschluss daran einer Filtration unterzogen wird und wobei das Brenngas in einer zweiten Verfahrensstufe wenigstens einem Brenner des metallurgischen Prozesses zugeführt wird, **dadurch gekennzeichnet, dass** das Brenngas aus der Filtration direkt dem wenigstens einen Brenner der zweiten Verfahrensstufe zugeführt wird, wobei nach dem Abkühlen die Temperatur des Brenngases durch die Zufuhr von Wärme oberhalb der Kondensationstemperatur von Teer und innerhalb des Bereiches von 300 - 600 °C, vorzugsweise 350 - 450 °C, gehalten wird.

6. Ein Verfahren nach Anspruch 5, **dadurch gekennzeichnet, dass** die Biomasse in einer Wirbelschicht vergast wird.

7. Ein Verfahren nach Anspruch 5 oder 6, **dadurch gekennzeichnet, dass** der bei der Abkühlung des Brenngases erzeugte Dampf wenigstens teilweise zur Stromerzeugung und/oder in der ersten Verfahrensstufe genutzt wird.

8. Ein Verfahren nach Anspruch 5 oder 6, **dadurch gekennzeichnet, dass** der bei der Abkühlung des Brenngases erzeugte Dampf wenigstens teilweise als Fluidisierungsgas in der Wirbelschicht genutzt wird.

## Revendications

1. Installation pour la production de gaz combustible et pour l'exécution d'un traitement métallurgique avec une première et une deuxième étape, dans lequel la première étape de traitement comprend au moins un réacteur (3) destiné à produire du gaz combustible contenant du monoxyde de carbone, de l'hydrogène, du dioxyde de carbone et/ou de la vapeur, et au moins un conduit d'alimentation respectif pour de la biomasse (1) et un gaz contenant de l'oxygène (2), dans laquelle la deuxième étape de traitement comprend au moins un réacteur (9) destiné à exécuter un traitement métallurgique et au moins un brûleur, et dans lequel, après la première étape de traitement, il est prévu au moins un dispositif de refroidissement (5) et subséquemment au moins un filtre (7), **caractérisée en ce qu'**un conduit de direction (8) mène du filtre (7) vers au moins l'un des brûleurs de la deuxième étape de traitement, et **en ce que** le conduit (8) est équipé d'au moins un dispositif d'alimentation de chaleur, destiné à maintenir la température du gaz combustible au-dessus de la température de condensation du goudron.

2. Installation selon la revendication 1, **caractérisée en ce que** le dispositif de refroidissement (5) est un générateur de vapeur.

3. Installation selon la revendication 2, **caractérisée en ce que** la sortie de vapeur du générateur de vapeur (5) est reliée à un système de génération de puissance (22) et/ou à la première étape de traitement par le biais d'un conduit (11, 12, 13).

4. Installation selon la revendication 3, **caractérisée en ce qu'**une soupape destiné à réguler ou à commander la quantité de vapeur est prévue dans le conduit (12) menant du générateur de vapeur (5) à la première étape de traitement.

5. Procédé pour la production de gaz combustible et pour l'exécution d'un traitement métallurgique dans l'installation selon la revendication 1, dans lequel, dans une première étape de traitement, une biomasse est amenée à régir avec un gaz contenant de l'oxygène, pour obtenir un gaz combustible contenant du monoxyde de carbone, de l'hydrogène, du dioxyde de carbone et/ou de la vapeur, dans lequel le gaz combustible obtenu est refroidi à une température entre 300 et 600°C, de préférence entre 350 et 450°, puis soumise à une filtration, et dans lequel, dans une deuxième étape de traitement, le gaz combustible est alimenté vers au moins un brûleur du traitement métallurgique, **caractérisé en ce que** le gaz combustible venant de la filtration est alimenté directement vers l'au moins un brûleur de la deuxième étape de traitement, dans lequel, après le refroidissement, la température du gaz combustible est maintenue au-dessus de la température de condensation du goudron et dans une plage de 300 à 600°C, de préférence de 350 à 450°C, par apport de chaleur.

6. Procédé selon la revendication 5, **caractérisé en ce que** la biomasse est gazéifiée dans un lit fluidisé.

7. Procédé selon la revendication 5 ou 6, **caractérisé en ce que** la vapeur générée lors du refroidissement du gaz combustible est au moins partiellement utilisée pour la génération de puissance et/ou dans la première étape de traitement.

8. Procédé selon la revendication 5 ou 6, **caractérisé en ce que** la vapeur générée lors du refroidissement du gaz combustible est au moins partiellement utilisée comme gaz fluidisant dans le lit fluidisé.
